# EUROPÄISCHE PATENTSCHRIFT

(11) **EP 2 502 476 B1**
(45) Veröffentlichungstag und Bekanntmachung des Hinweises auf die Patenterteilung: **20.03.2013**
(21) Anmeldenummer: 11159348.9
(22) Anmeldetag: 23.03.2011
(51) Int. Cl.: A01B 27/00, A01B 29/04

(54) **Landwirtschaftliche Bodenbearbeitungsvorrichtung**
Agricultural soil cultivation device
Dispositif de traitement de sol agricole

(43) Veröffentlichungstag der Anmeldung: 26.09.2012
(73) Patentinhaber: Horsch Maschinen GmbH, 92421 Schwandorf (DE)
(72) Erfinder: Horsch, Philipp, 92421 Schwandorf (DE)
(74) Vertreter: Benninger, Johannes

(56) Entgegenhaltungen:
- WO-A2-98/18310
- WO-A2-98/57530
- DE-U1- 20 106 545
- DE-U1- 29 905 406

## Beschreibung

Die vorliegende Erfindung betrifft eine landwirtschaftliche Bodenbearbeitungsvorrichtung mit den Merkmalen des unabhängigenPatentanspruchs.

In der landwirtschaftlichen Bodenbearbeitung werden oftmals sog. Packer zur Vorbereitung des Bodens zur Aussaat eingesetzt. Derartige Packer werden meist als Nachlaufgeräte, insbesondere hinter einem gezogenen Pflug eingesetzt, wodurch der durch das Pflügen grobschollig gelockerte Boden in feinere Schollen zerteilt und rückverdichtet wird. Auf diese Weise soll ein für die Aussaat geeignetes Saatbett gebildet und die Durchlüftung und Belebung sowie die Kapillarität des Bodens verbessert werden. Es ist allerdings auch möglich und üblich, derartige Packer hinter einer Vielzahl anderer Bodenbearbeitungsgeräte einzusetzen, bspw. auch hinter Sämaschinen.

Die bekannten Packer weisen oftmals mehrere relativ schmale Metallscheiben mit einem Durchmesser von jeweils ca. 40 bis 100 Zentimetern auf, die einzeln drehbar auf einer Querwelle gelagert sind. Dabei gibt eine Vielzahl von Varianten. So können bspw. einzelne Ringe miteinander fest verbunden sein. Durch ihr hohes Gewicht von bis zu 600 Kilogramm pro Meter Arbeitsbreite dringen die Scheiben der Packer tief in den Boden ein. Die Packer können am Pflug angehängt oder als sog. integrierte Packer fest am Pflug angebaut sein.

Neben den genannten Varianten sind Packer in landwirtschaftlichen Bodenbearbeitungskombinationen in weiteren unterschiedlichen Bauvarianten bekannt. So können offene oder geschlossene walzenartige Körper eingesetzt werden. Zudem können für die Rotationselemente verschiedene Materialien wie Stahl- oder Kunststoffringe oder -körper verwendet werden. Für leichtere Böden und geringere Arbeitstiefen können anstelle der Metallscheiben auch Gummireifen eingesetzt werden, die luftgefüllt oder selbsttragend sein können.

Darüber hinaus sind Packerbauarten mit starren oder flexiblen Elementen bekannt geworden, so bspw. aus der EP 0 998 185 B1. Bei dieser Vorrichtung sind mehrere Stahlfederelemente derart angeordnet, dass sie sich beim Abrollen federnd bewegen und elastisch ausweichen, bis sie an einem starren Anschlag aufliegen. Auf diese Weise wird unter Belastung ein annähernd geschlossener Ring gebildet, der das Gewicht der Maschine tragen kann. Der Vorteil solcher beweglichen Federelemente besteht u.a. darin, dass bei der Arbeit im Feld unter klebrigen Bodenbedingungen die anhaftende Erde an den Elementen durch deren Bewegung immer wieder abfällt, was einem Selbstreinigungseffekt entspricht. Grundsätzlich können bei derartigen Packern solche beweglichen Elemente in Umfangsrichtung in verschiedener Anzahl (2 bis n) zu einem Ringelement verschraubt werden. So zeigt die EP 0 998 185 B1 bspw. mehrteilige Ringelemente, bestehend aus jeweils vier einzelnen Federn. Diese Ringe können in unterschiedlichen Abständen auf einer rohrförmigen Welle angeordnet sein, so dass ein Walzenkörper beliebiger Breite gebildet sein kann.

Eine weitere Packervorrichtung ist in der EP 1 038 423 A1 offenbart, dort allerdings mit jeweils drei Federelementen, die einen annähernd geschlossenen Ring bilden. Mehrere solche elastischen Ringe bilden die Packerwalze, wobei jeweils zwischen benachbarten Ringen Kammelemente eingreifen.

Die DE 10 2009 032 373 A1 zeigt eine Bodenbearbeitungsvorrichtung mit einer horizontalen drehbaren Welle und daran angeordneten sichelförmigen Federarmen, die einseitig an der Welle befestigt und mit ihren freien Enden einen Teil eines Umkreises um die Achse bilden und federnd nachgiebig sind. Die sichelförmigen Federarme ragen von der Welle aus in einer von einer radialen Richtung abweichenden Richtung nach außen und gehen im weiteren Verlauf in einer Krümmung in den Abschnitt über, der einen Teil des Umkreises um die Achse bildet.

Weitere Ausführungsvarianten einer Packervorrichtung mit flexiblen Federelementen sind aus der WO 02/082 880 A2und der WO 98/183 10 A2 bekannt, während die US 27 76 532 A eine Packerwalze mit relativ starren äußeren Eingriffselementen beschreibt.

Bei den aus dem Stand der Technik bekannten Packervorrichtungen werden die eingesetzten Packerfederelemente aus einem flachen elastischen Material wie bspw. Federstahl gefertigt. Dabei können allerdings unterschiedliche Probleme auftreten. Wenn eine vom Boden bzw. von Bodenunebenheiten oder überrollten Steinen verursachte Kraft im mittleren Bereich eines Federelements, d.h. zwischen Befestigung und Anschlag, zu hoch wird, wie dies bspw. bei sehr schweren Maschinen vorkommen kann, dann kann eine solche flache Feder, bekannt bspw. aus EP 0 998 185 B1, durch diese hohe Belastung sich soweit durchbiegen, dass eine plastische Verformung des Materials zurück bleibt, die dann zu einem schnelleren Versagen der Feder und zu deren Bruch führen kann. Um diesem Problem abzuhelfen, wird meist die Materialstärke bzw. Dicke der flachen Feder so weit erhöht, dass keine plastischen Verformungen mehr auftreten, was jedoch zu unnötig hohen Gewichten und Kosten führt. Gleichzeitig wird die Feder durch die größere Materialstärke im Federbereich immer steifer und dadurch auch wiederum bruchempfindlicher. Um diesen Steifigkeitsproblemen entgegen zu wirken, muss bei dickeren Federn der Anschlag verlängert bzw. der Federweg verringert werden, um die Feder vor Überdehnungen zu schützen. Dies wirkt sich aber wiederum negativ auf den Selbstreinigungseffekt aus.

Ausgehend von den aus dem Stand der Technik bekannten Packervorrichtungen wird das vorrangige Ziel der vorliegenden Erfindung darin gesehen, eine verbesserte Packervorrichtung zur Verfügung zu stellen, die bei relativ geringem Maschinengewicht über die gewünschten elastischen Eigenschaften der Federelemente verfügt, ohne dass damit eine erhöhte Bruchgefahr dieser Federelemente verbunden wäre. Zudem soll die Packervorrichtung eine möglichst gute Selbstreinigung der Federelemente aufweisen.

Dieses Ziel der Erfindung wird mit den Gegenständen der unabhängigen Ansprüche erreicht. Merkmale vorteilhafter Weiterbildungen der Erfindung ergeben sich aus den jeweiligen abhängigen Ansprüchen. Zur Erreichung des genannten Ziels schlägt die Erfindung eine landwirtschaftliche Bodenbearbeitungsvorrichtung mit einem rotierenden Walzenwerkzeug mit den Merkmalen des unabhängigen Anspruchs 1 vor, die eine um eine im Wesentlichen horizontale Achse drehende Welle aufweist, an der über ihren Umfang sowie über ihre Breite verteilt eine Mehrzahl von sichelförmigen Federelementen angeordnet sind, die jeweils mit einem Endabschnitt an der Welle fixiert sind. Die Federelemente sind jeweils so geformt, dass sie in Richtung ihres anderen, freien Endabschnittes gekrümmt sind und sich über ein Umfangssegment eines zur rotierenden Welle annähernd koaxialen äußeren Kreisumfangs oder einer kreisähnlichen Kontur des Walzenwerkzeugs erstrecken. Erfindungsgemäß weisen zumindest einige der Federelemente oder wahlweise alle Federelemente zumindest in einem Abschnitt mit flachem Querschnitt eine definierte elastische Nachgiebigkeit und in wenigstens einem Abschnitt in Richtung des freien Endes und/oder im Bereich ihres Umfangssegmentes einen profilierten Querschnitt mit definierter Biegesteifigkeit auf. Diese Profilierungen der Querschnitte der Federelemente können bspw. durch dachförmige Konturen und/oder durch ein- oder mehrfach gewellte und/oder gekantete Konturen gebildet sein.

Der Gegenstand der vorliegenden Erfindung löst somit die eingangs genannten Probleme dadurch, dass der gegen Verformung empfindliche Bereich der Federelemente jeweils profiliert wird, wodurch eine besonders hohe Steifigkeit erreicht wird. Dieser profilierte Bereich umfasst im Wesentlichen den Abrollumfang der Feder zwischen Befestigung und Anschlag. Die Profilierung kann in verschiedenster Art und Weise ausgestaltet sein, vorzugsweise jedoch in einer Art, so dass einerseits ein möglichst hohes Widerstandsmoment erreicht wird und andererseits die Profilierung sich positiv auf die Zerkleinerungswirkung bei der Arbeit im Feld auswirkt. Denkbar sind dachartige Formen, aber auch U-förmige Querschnitte oder beliebige wellenartige Formen mit mehreren Rippenausprägungen.

Die Federelemente können somit in vorteilhafter Weise aus dünnerem Material gefertigt werden, woraus u.a. die folgenden Vorteile resultieren. Der profilierte Bereich wird besonders stabil und steif. Je nach Profilierung kann die Materialstärke um bis zu 50% reduziert werden, ohne dass darunter die Steifigkeit gegenüber bekannten Gestaltungen leidet.

Bei einer weiteren vorteilhaften Ausführungsvariante der erfindungsgemäßen Bodenbearbeitungsvorrichtung können sich die Profilierungen der Federelemente weitgehend über die gesamte Länge des Bereichs in Richtung des freien Endes erstrecken, welches ein Umfangssegment des Walzenwerkzeugs beschreibt. Wahlweise können die Profilierungen über die Länge in ihrer Ausprägung und/oder Profilierungstiefe variieren, so dass eine an das typische Verformungsverhalten und an die auftretenden Belastungskräfte angepasste Steifigkeit erreicht werden kann. So können die Federelemente bspw. entlang ihrer Längserstreckung in Richtung des freien Endes jeweils unterschiedlich stark profiliert und damit unterschiedlich elastisch bzw. biegesteif sein.

Weiterhin können die Federelemente radial nach außen oder in spitzem Winkel zur radialen Richtung an der Welle verankert und im Bereich des äußeren Kreisumfangs des Walzenwerkzeugs und in Richtung des Umfangssegments in tangentialer Richtung gekrümmt sein. So können die Federelemente insbesondere um ungefähr 80° bis 130° in engem Radius gekrümmt und vorzugsweise in diesem Bereich nicht profiliert sein, wodurch sie in diesem Krümmungsabschnitt gut federn. In den weiteren, sich an die 80°...130°-Krümmung anschließenden Bereichen sind die Federelemente dagegen in der erwähnten Weise profiliert und damit biegesteif. Der Krümmungsradius bzw. -winkel kann vorzugsweise jedoch in einem engeren Bereich von bspw. ca. 100°...110° liegen.

Die freien Enden der Federelemente sind vorzugsweise jeweils an einem Endanschlag abgestützt, wobei diese Endanschläge jeweils an der Welle fixiert sind, z.B. als radial abstehende Balken o.dgl. Da die Verankerung bzw. Fixierung eines Federelements typischerweise unmittelbar an den Endanschlag eines benachbarten Federelements grenzt, lassen sich diese Teile auch baulich vereinigen. Die gegenüber bekannten Federelementen nunmehr dünnere Materialstärke im Federbereich wird beim Einfedern bis zum Anschlag nicht mehr überdehnt und ist somit besonders dauerwechselfest. Der Anschlag kann bei Bedarf verkürzt werden, wodurch der Federweg verlängert und der Selbstreinigungseffekt verbessert werden kann.

Zudem kann es von Vorteil sein, zumindest einige der Endanschläge, vorzugsweise jedoch alle Endanschläge an ihren zum jeweiligen freien Ende des Federelementes weisenden Stirnseiten in korrespondierender Weise zur Profilierung der Federelemente zu gestalten bzw. zu konturieren. Die Stirnseiten der Endanschläge können somit profiliert sein, korrespondierend zur Profilierung des Federelement-Querschnittes, damit dieses dort formschlüssig aufliegen kann. Ein schräges Abgleiten der Federelemente von den Anschlägen wird somit zuverlässig verhindert. Durch diese Anpassung des Anschlags auf die Profilierung der Federelemente werden diese beim Anliegen auf dem Anschlag zentriert und bleiben unter Belastung seitlich fixiert. Ein seitliches Verbiegen und/oder Abrutschen der Packerfeder vom Anschlag ist somit ausgeschlossen.

Die jeweiligen Abstände der Stirnseiten der Endanschläge vom entspannten bzw. unbelasteten freien Ende der Federelemente definieren deren verfügbaren Federweg. Hierbei stellt der profilierte Bereich jeweils den Hauptkontaktbereich des Packers mit der Erde dar. Durch eine Profilierung wird ein zusätzlicher, äußerst positiver und gewollter Zerkleinerungseffekt im Vergleich zur bisher flachen Feder erreicht. Das Gewicht und die Kosten der Elemente können deutlich reduziert werden.

Eine Variante der erfindungsgemäßen Bodenbearbeitungsvorrichtung sieht vor, dass eine Mehrzahl von Gruppen von Federelementen gleich oder unterschiedlich voneinander beabstandet über die Arbeitsbreite des Walzenwerkzeugs verteilt angeordnet sind, wobei bei einzelnen Gruppen jeweils zwei Federelemente mit Umfangssegmenten von je ca. 180° oder drei Federelemente mit Umfangsegmenten von je ca. 120° oder vier Federelemente mit Umfangssegmenten von je ca. 90° oder fünf Federelemente mit Umfangssegmenten von je ca. 72° etc. vorgesehen sind. Die Anzahl der mechanischen Endanschläge entspricht sinnvollerweise der Anzahl der vorhandenen Federelemente.

Eine weitere Option der Bodenbearbeitungsvorrichtung kann vorsehen, dass zumindest einige der Federelemente auch entlang zumindest eines Teils ihrer Längserstreckungsrichtung profiliert, gewellt und/oder gezackt sind, wodurch der gewünschte Selbstreinigungseffekt beim Arbeiten im Ackerboden nochmals verbessert werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine perspektivische Darstellung eines Teils einer erfindungsgemäßen landwirtschaftlichen Bodenbearbeitungsvorrichtung mit einem rotierenden Walzenwerkzeug.
Fig. 2 zeigt eine Frontansicht des in Fig. 1 gezeigten Teils des Walzenwerkzeuges.
Fig. 3 zeigt eine perspektivische Ansicht eines Funktionsausschnittes des Walzenwerkzeugs gemäß Fig. 1.
Fig. 4 zeigt eine Seitenansicht der in Fig. 3 dargestellten Bauteile des Walzenwerkzeugs.
Fig. 5 zeigt eine Draufsicht auf ein Federelement des Walzenwerkzeugs.
Fig. 6 zeigt eine Seitenansicht des Federelements gemäß Fig. 5.
Fig. 7 zeigt eine perspektivische Darstellung eines mit einem mechanischen Anschlag zusammenwirkenden Federelements des Walzenwerkzeuges.
Fig. 8 zeigt eine schematische Draufsicht des Anschlages und des Federelements gemäß Fig. 7.
Fig. 9 zeigt eine schematische Seitenansicht des Anschlages und des Federelements gemäß Fig. 7.

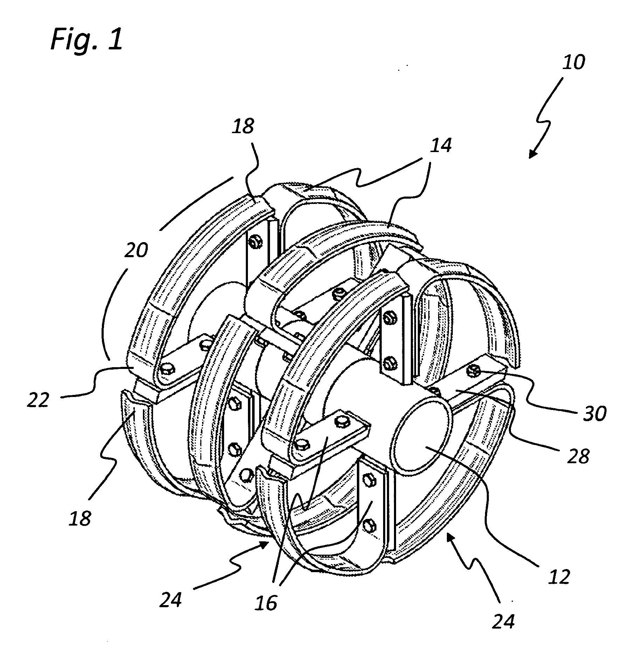

Für gleiche oder gleich wirkende Elemente der Erfindung werden in den Figuren 1 bis 9 jeweils gleiche Bezugszeichen verwendet. Ferner werden der Übersicht halber teilweise nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

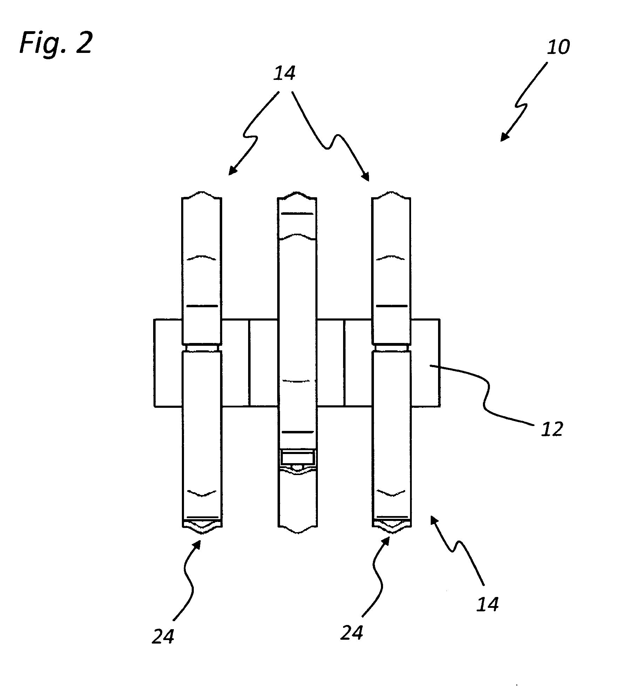

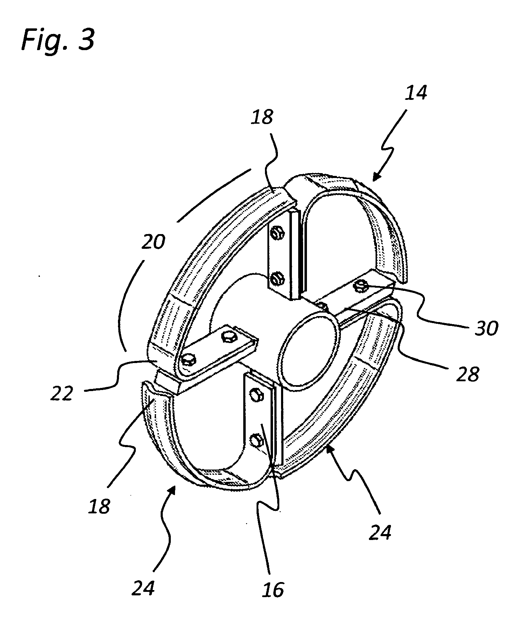

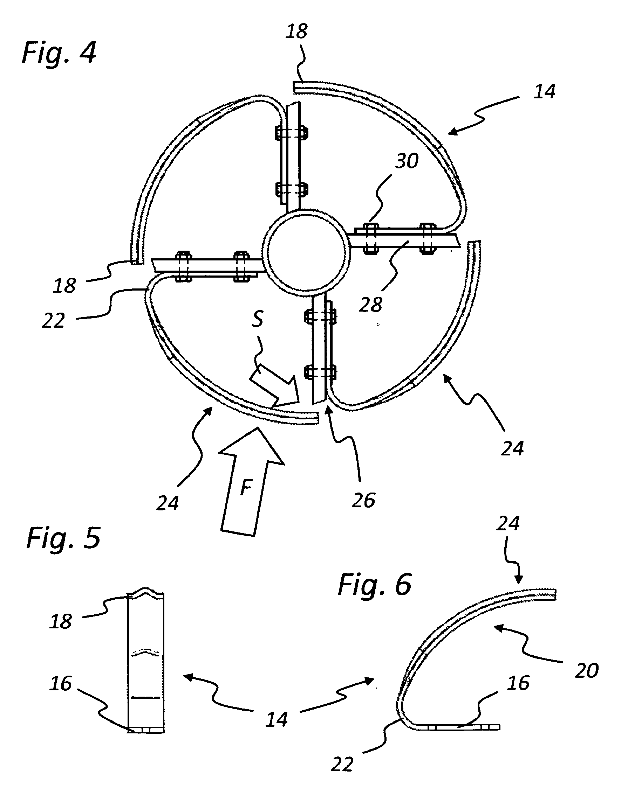

Die schematische Perspektivdarstellung der Fig. 1 und die Frontalansicht der Fig. 2 verdeutlichen anhand eines Ausführungsbeispiels die wesentlichen Komponenten einer erfindungsgemäßen landwirtschaftlichen Bodenbearbeitungsvorrichtung, von der jedoch lediglich ein kurzer Teilabschnitt eines rotierenden Walzenwerkzeugs 10 mit drei beabstandet nebeneinander angeordneten sog. Packermodulen oder -einheiten dargestellt ist. Die typischerweise hinter einem landwirtschaftlichen Zugfahrzeug, insbesondere hinter einem gezogenen Pflugwerkzeug (nicht dargestellt) gezogene Bodenbearbeitungsvorrichtung dient zum Zerkleinern der beim Pflügen aufgeworfenen Erdschollen und zum Verdichten des Ackerbodens, um ihn für die nachfolgende Aussaat vorzubereiten. Die perspektivische Ansicht der Fig. 3 und die Seitenansicht der Fig. 4 verdeutlichen einen Funktionsausschnitt des Walzenwerkzeugs 10 gemäß Fig. 1.

Zum Zweck der Bodenbearbeitung nach dem Pflügen umfasst das rotierende Walzenwerkzeug 10 eine um eine im Wesentlichen horizontale Achse drehende Welle 12, an der über ihren Umfang sowie über ihre Breite verteilt eine Mehrzahl von sichelförmigen Federelementen 14 angeordnet sind, die jeweils mit einem Endabschnitt 16 an der Welle fixiert sind. Die Federelemente 14 sind jeweils so geformt, dass sie in Richtung ihres anderen, freien Endabschnittes 18 gekrümmt sind und sich über ein Umfangssegment 20 eines zur rotierenden Welle 12 annähernd koaxialen äußeren Kreisumfangs oder einer kreisähnlichen Kontur des Walzenwerkzeugs 10 erstrecken.

Um die ihnen zugedachte Aufgabe in gewünschter Weise zu erfüllen, weisen die Federelemente 14 in einem stark gekrümmten Übergangsbereich 22 zwischen ihrem an der Welle 12 fixierten Endabschnittes 16 und dem als Umfangssegment 20 gekrümmten Bereich eine definierte elastische Nachgiebigkeit auf. Zu diesem Zweck weist dieser elastische Übergangsbereich 22 einen nicht profilierten flachen Querschnitt auf, so dass dort die Materialdicke und die Materialeigenschaften der typischerweise aus Stahl, insbesondere aus Federstahl gefertigten Federelemente 14 die elastischen Eigenschaften und die Federhärte dieses Krümmungsbereiches 22 definieren.

Gemäß der vorliegenden Erfindung weisen die Federelemente 14 im Bereich ihres Umfangssegmentes 20 und in Richtung des freien Endes 18 eine Profilierung bzw. einen profilierten Querschnitt 24 mit definierter Biegesteifigkeit auf. Diese Profilierungen 24 der Querschnitte der Federelemente 14 können bspw. in der dargestellten Weise durch dachförmige Konturen und/oder durch ein- oder mehrfache gewellte und/oder gekantete Konturen gebildet sein. Die Federelemente 14 können somit aus relativ dünnem Federstahl gefertigt sein. Da der profilierte Bereich besonders stabil und steif ist, kann die Materialstärke der Federelemente 14 je nach Profilierung 24 gegenüber herkömmlichen Federelementen um bis zu 50% oder mehr reduziert werden, ohne dass darunter die Steifigkeit gegenüber bekannten Gestaltungen leidet.

Wie in den Figuren 1, 3 und 4 verdeutlicht, können sich die Profilierungen 24 der Federelemente 14 weitgehend über die gesamte Länge des Umfangssegmentes 20 in Richtung des freien Endes 18 erstrecken. Wahlweise können die Profilierungen 24 über die Länge in ihrer Ausprägung oder Tiefe variieren, so dass eine an das typische Verformungsverhalten und an die auftretenden Belastungskräfte angepasste Steifigkeit erreicht werden kann. So können die Federelemente 14 bspw. entlang ihrer Längserstreckung in Richtung des freien Endes 18 jeweils unterschiedlich stark profiliert und damit unterschiedlich elastisch bzw. biegesteif sein.

Die schematische Seitenansicht der Fig. 4 verdeutlicht die Belastungskräfte F durch die Gewichtskraft der hier nicht dargestellten Maschine und die für die Verformung der Federelemente 14 jeweils zur Verfügung stehenden Federwege S, die sich zwischen dem freien Ende 18 jedes Federelementes 14 und einem mechanischen Anschlag 26 für das jeweilige Federelement 14 befinden. Wie insbesondere aus der Fig. 4 hervorgeht, können die Federelemente 14 in ihrem an der Welle 12 fixierten Endabschnitt 16 radial nach außen verlaufen und jeweils an einem entsprechenden radial verlaufenden Steg oder Flügel 28 verschraubt sein, bspw. mit zwei voneinander beabstandeten Befestigungsschrauben 30. Ausgehend von ihrem radialen Abschnitt 16, mit dem die Federelemente 14 am Steg bzw. Flügel 28 verschraubt sind, verlaufen die Federelemente 14 anschließend im Krümmungsbereich 22 in einem spitzem Winkel von ca. 100° bis 110° zur radialen Richtung, wie dies insbesondere in Fig. 4 und Fig. 6 verdeutlicht ist. Anschließend verläuft die Längserstreckungsrichtung der Federelemente 14 entlang der Kreiskontur in Richtung des freien Endes 18 als Umfangssegment 20, so dass sie im Bereich des äußeren Kreisumfangs des Walzenwerkzeugs 10 und in Richtung des Umfangssegments 20 in tangentialer Richtung gekrümmt sind.

Wahlweise kann der Krümmungsbereich 22 auch andere Krümmungswinkel von bspw. ca. 80° bis zu ca. 130° aufweisen.

Wie nochmals das in Fig. 6 dargestellte einzelne Federelement 14 verdeutlicht, kann der Krümmungsbereich 22 insbesondere um ungefähr 100° bis 110° in engem Radius gekrümmt und vorzugsweise in diesem Bereich nicht profiliert sein, wodurch die gewünschte Federwirkung in diesem Krümmungsabschnitt 22 lokalisiert ist. In den weiteren, sich an den elastischen Krümmungsbereich 22 anschließenden Umfangssegmentbereichen 20 sind die Federelemente 14 dagegen in der erwähnten Weise profiliert und damit biegesteif.

Der mit den Federelementen 14 zur Verfügung stehende Federweg S wurde bereits anhand der Fig. 4 deutlich gemacht. So definiert sich dieser Federweg S durch den Abstand der freien Enden 18 der Federelemente 14 im unbelasteten Zustand von den ihnen jeweils zugeordneten mechanischen Endanschlägen 26, die jeweils an der Welle 12 fixiert sind, z.B. als radial abstehende Balken, Stege oder Flügel 28, wie in den Figuren gezeigt. Da die Fixierung der Federelement 14 jeweils unmittelbar an den Endanschlag 26 eines benachbarten Federelements 14 grenzt, sind diese Teile im gezeigten Ausführungsbeispiel baulich vereinigt. So dienen die Endanschläge 26 jeweils zur Aufnahme der Verschraubungen 30 für ein angrenzendes Federelement 14. Der besondere Vorteil der erfindungsgemäßen Anordnung besteht gegenüber bekannten Federelementen darin, dass die verwendete dünnere Materialstärke im Federbereich, insbesondere im Krümmungsbereich 22 beim Einfedern bis zum Anschlag 26 unter Nutzung des maximalen Federwegs S nicht mehr überdehnt wird und somit dauerwechselfest ist. Der Anschlag 26 kann bei Bedarf verkürzt werden, wodurch der Federweg S verlängert und der Selbstreinigungseffekt verbessert werden kann.

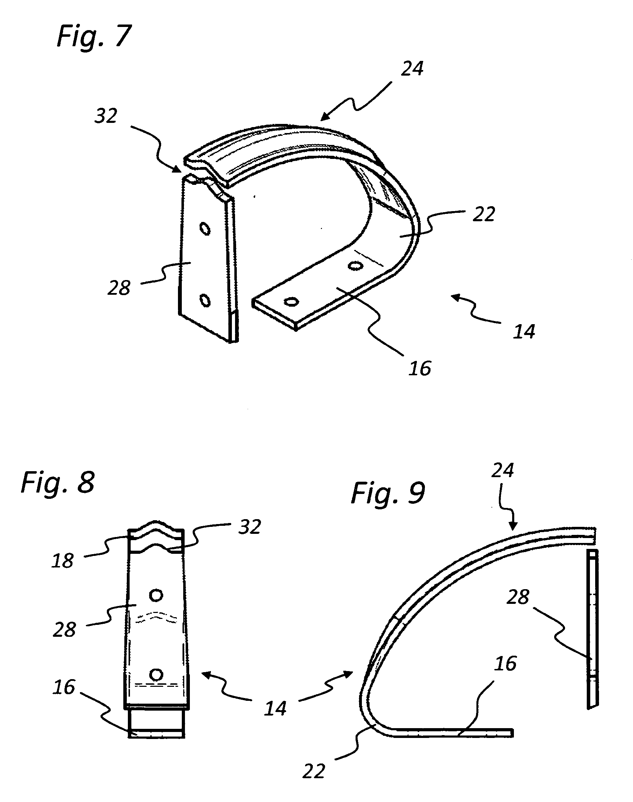

Die Fig. 7, Fig. 8 und Fig. 9 zeigen eine weitere vorteilhafte Variante des erfindungsgemäßen rotierenden Walzenwerkzeugs 10, bei dem zumindest einige der Endanschläge 26, vorzugsweise jedoch alle Endanschläge 26 an ihren zu den jeweiligen freien Enden 18 der Federelemente 14 weisenden Stirnseiten 32 in korrespondierender Weise zur Profilierung 24 der Federelemente 14 zu gestalten bzw. zu konturieren. Die Stirnseiten 32 der Endanschläge 26 sind somit korrespondierend zur Profilierung 24 der Federelement-Querschnitte konturiert, damit die freien Enden 18 der Federelemente 14 dort jeweils formschlüssig aufliegen können. Ein schräges Abgleiten der Federelemente 14 von den Anschlägen 26 kann somit zuverlässig verhindert werden. Durch diese Anpassung des Anschlags 26 auf die Profilierung 24 der Federelemente 14 werden diese beim Anliegen auf dem Anschlag 26 zentriert und bleiben unter Belastung seitlich fixiert. Ein seitliches Verbiegen und/oder Abrutschen der Packerfedern von ihren jeweiligen Endanschlägen 26 kann auf diese Weise ausgeschlossen werden.

Die jeweiligen Abstände der Stirnseiten 32 der Endanschläge 26 vom entspannten bzw. unbelasteten freien Ende 18 der Federelemente 14 definieren deren verfügbaren Federweg S. Hierbei stellt der profilierte Bereich 24 jeweils den Hauptkontaktbereich des Packers mit der Erde dar. Durch eine Profilierung 24 wird ein zusätzlicher, äußerst positiver und gewollter Zerkleinerungseffekt im Vergleich zur bisher flachen Feder erreicht. Das Gewicht und die Kosten der Federelemente 14 können deutlich reduziert werden.

Wie die Figuren zeigen, kann eine Mehrzahl von Gruppen von Federelementen 14 gleich oder unterschiedlich voneinander beabstandet über die Arbeitsbreite des Walzenwerkzeugs 10 verteilt angeordnet sein. Jede dieser Gruppen wird aus insgesamt vier über den Umfang verteilten Federelementen 14 gebildet, so dass die einzelnen Federelemente 14 jeweils Umfangssegmente von ca. 90° bilden. Selbstverständlich sind auch andere Teilungen möglich, so bspw. zwei Federelemente mit Umfangssegmenten von je ca. 180° oder drei Federelemente mit Umfangsegmenten von je ca. 120° oder fünf Federelemente mit Umfangssegmenten von je ca. 72° etc. Eine entsprechende Anzahl von Stegen 28 fungiert jeweils als mechanischer Anschlag 26 für die vorhandenen Federelemente 14.

Eine weitere, jedoch hier nicht dargestellte Option beim Walzenwerkzeug 10 der erfindungsgemäßen Bodenbearbeitungsvorrichtung kann darüber hinaus vorsehen, dass zumindest einige der Federelemente 14 auch entlang zumindest eines Teils ihrer Längserstreckungsrichtung profiliert, gewellt und/oder gezackt sind, wodurch der gewünschte Selbstreinigungseffekt beim Arbeiten im Ackerboden nochmals verbessert werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: rotierendes Walzenwerkzeug
- 12: Welle
- 14: Federelement
- 16: Endabschnitt
- 18: freies Ende, Endabschnitt
- 20: Umfangssegment
- 22: Krümmung, Krümmungsbereich
- 24: Profilierung, profilierter Querschnitt
- 26: Anschlag, Endanschlag, mechanischer Anschlag
- 28: Steg, Flügel
- 30: Verschraubung
- 32: Stirnseite
- F: Kraft, Andrückkraft
- S: Federweg

## Patentansprüche

1. Landwirtschaftliche Bodenbearbeitungsvorrichtung mit einem rotierenden Walzenwerkzeug (10), umfassend eine um eine im Wesentlichen horizontale Achse drehende Welle (12), an der über ihren Umfang sowie über ihre Breite verteilt eine Mehrzahl von sichelförmigen Federelementen (14) angeordnet sind, die jeweils mit einem Endabschnitt (16) an der Welle (12) fixiert sind und in Richtung ihres anderen, freien Endabschnittes (18) gekrümmt sind und sich über ein Umfangssegment (20) eines zur rotierenden Welle (12) annähernd koaxialen äußeren Kreisumfangs oder einer kreisähnlichen Kontur des Walzenwerkzeugs (10) erstrecken, **dadurch gekennzeichnet, dass** zumindest einige der Federelemente (14) zumindest in einem Abschnitt mit flachem Querschnitt eine definierte elastische Nachgiebigkeit und in wenigstens einem Abschnitt in Richtung des freien Endes (18) und/oder im Bereich ihres Umfangssegmentes (20) einen profilierten Querschnitt (24) mit definierter Biegesteifigkeit aufweisen.

2. Bodenbearbeitungsvorrichtung nach Anspruch 1, bei der die Profilierungen (24) der Querschnitte der Federelemente (14) dachförmige Konturen und/oder ein- oder mehrfache gewellte und/oder gekantete Konturen vorsehen.

3. Bodenbearbeitungsvorrichtung nach Anspruch 1 oder 2, bei der sich die Profilierungen (24) der Federelemente (14) weitgehend über die gesamte Länge des Bereichs in Richtung des freien Endes (18) erstrecken, welches ein Umfangssegment (20) des Walzenwerkzeugs (10) beschreibt.

4. Bodenbearbeitungsvorrichtung nach einem der Ansprüche 1 bis 3, bei der die Federelemente (14) radial nach außen oder in spitzem Winkel zur radialen Richtung an der Welle (12) verankert und im Bereich des äußeren Kreisumfangs des Walzenwerkzeugs (10) und in Richtung des Umfangssegments (20) in tangentialer Richtung gekrümmt sind.

5. Bodenbearbeitungsvorrichtung nach einem der Ansprüche 1 bis 4, bei der die Federelemente (14) entlang ihrer Längserstreckung in Richtung des freien Endes (18) jeweils unterschiedlich stark profiliert sind.

6. Bodenbearbeitungsvorrichtung nach einem der Ansprüche 1 bis 5, bei der die freien Enden (18) der Federelemente (14) jeweils an einem Endanschlag (26) abgestützt sind, die an der Welle (12) fixiert sind.

7. Bodenbearbeitungsvorrichtung nach Anspruch 6, bei der zumindest einige der Endanschläge (26) an ihren zum jeweiligen freien Ende (18) des Federelementes (14) weisenden Stirnseiten (32) in korrespondierender Weise zur Profilierung (24) der Federelemente (14) konturiert sind.

8. Bodenbearbeitungsvorrichtung nach Anspruch 6 oder 7, bei der die jeweiligen Abstände der Stirnseiten (32) der Endanschläge (26) vom entspannten freien Ende (18) der Federelemente (14) deren verfügbaren Federweg (S) definieren.

9. Bodenbearbeitungsvorrichtung nach einem der Ansprüche 1 bis 8, bei der eine Mehrzahl von Gruppen von Federelementen (14) gleich oder unterschiedlich voneinander beabstandet über die Arbeitsbreite des Walzenwerkzeugs (10) verteilt angeordnet sind, wobei bei einzelnen Gruppen jeweils zwei Federelemente (14) mit Umfangssegmenten (20) von je ca. 180° oder drei Federelemente (14) mit Umfangsegmenten (20) von je ca. 120° oder vier Federelemente (14) mit Umfangssegmenten (20) von je ca. 90° oder fünf Federelemente (14) mit Umfangssegmenten (20) von je ca. 72° etc. vorgesehen sind.

10. Bodenbearbeitungsvorrichtung nach einem der Ansprüche 1 bis 8, bei der zumindest einige der Federelemente (14) auch entlang zumindest eines Teils ihrer Längserstreckungsrichtung profiliert, gewellt und/oder gezackt sind.

## Claims

1. Agricultural soil cultivation device with a rotating roller implement (10), comprising a shaft (12) rotating around an essentially horizontal axis, with a multitude of crescent shaped spring elements (14) arranged over the entire circumference and width of said shaft (12), with said spring elements (14) being fastened to the shaft (12) each at one end section (16), and being bent in the direction of their other, free end section (18), then extending arcuately along a circumferential segment (20) of an outer circumference or a quasi-circular outline of the roller implement (10), with said circumference or outline being nearly coaxial to the rotating shaft (12), **characterized in that** at least some of the spring elements (14) have, in at least one flat cross-sectional section, a defined elastic pliability, and in at least one section in the direction toward the free end (18) and/or in the area of their circumferential segment (20) a profiled cross-section (24) of a defined bending stiffness.

2. Soil cultivation device according to claim 1, wherein the profiles (24) of the cross-sections of the spring elements (14) are provided with roof-shaped outlines and/or once or multiply folded and/or angled outlines.

3. Soil cultivation device according to claim 1 or 2, wherein the profiles (24) of the spring elements (14) extend broadly across the entire length of the area in the direction toward the free end (18), and wherein the free end (18) describes a circumferential segment (20) of the roller implement (10).

4. Soil cultivation device according to one of the claims 1 to 3, wherein the spring elements (14) are fastened to the shaft (12) so that they project outward radially or at an acute angle in relation to the radial direction, and wherein said spring elements (14) are curved in tangential direction in the area of the outer circumference of the roller implement (10) and in the direction of the circumferential segment (20).

5. Soil cultivation device according to one of the claims 1 to 4, wherein the spring elements (14) have varying profile depths in each case along their longitudinal extension in the direction toward the free end (18).

6. Soil cultivation device according to one of the claims 1 to 5, wherein the free ends (18) of the spring elements (14) are each supported by an end stop (26), whereby the end stops (26) are fastened to the shaft (12).

7. Soil cultivation device according to claim 6, wherein at least some of the end stops (26) are contoured at their front sides (32) pointing toward the respective free end (18) of the spring element (14), with the contour designed correspondingly to the profile (24) of the said spring elements (14).

8. Soil cultivation device according to claim 6 or 7, wherein the distances between the front sides (32) of the end stops (26) and the free ends (18) of the spring elements (14) in their relaxed state respectively define the available spring deflection (S).

9. Soil cultivation device according to one of the claims 1 to 8, wherein a multitude of groups of spring elements (14) are arranged across the working width of the roller implement (10) spaced at the same or at different intervals from each other, whereby the individual groups are each provided to have either two spring elements (14) with circumferential segments (20) of approximately 180 degrees each, or three spring elements (14) with circumferential segments (20) of approximately 120 degrees each, or four spring elements (14) with circumferential segments (20) of approximately 90 degrees each, or five spring elements (14) with circumferential segments (20) of approximately 72 degrees each, etc.

10. Soil cultivation device according to one of the claims 1 to 8, wherein at least some of the spring elements (14) are additionally profiled, folded, and/or serrated along at least a part of the direction of their longitudinal extension.

## Revendications

1. Dispositif agricole de travail du sol avec un outil en cylindre (10) rotatif, comprenant un arbre (12) qui tourne autour d'un axe pour l'essentiel horizontal et sur lequel est disposée une pluralité d'éléments formant ressort (14) en forme de croissant qui sont répartis sur la circonférence et sur la largeur de celui-ci et qui sont fixés chacun par une portion terminale (16) sur ledit arbre (12) et sont courbés en direction de leur autre portion terminale libre (18) et s'étendent sur un segment circonférentiel (20) d'une circonférence circulaire extérieure à peu près coaxiale à l'arbre rotatif (12) ou d'un contour similaire à un cercle dudit outil en cylindre (10), **caractérisé par le fait que** quelques-uns au moins desdits éléments formant ressort (14) présentent, au moins dans une portion à section transversale plate, une élasticité définie et, dans au moins une portion en direction de ladite extrémité libre (18) et/ou dans la zone de leur segment circonférentiel (20), une section transversale profilée (24) à rigidité en flexion définie.

2. Dispositif de travail du sol selon la revendication 1, dans lequel les profilages (24) des sections transversales des éléments formant ressort (14) prévoient des contours en forme de toit et/ou des contours ondulés et/ou pliés simples ou multiples.

3. Dispositif de travail du sol selon la revendication 1 ou 2, dans lequel les profilages (24) des éléments formant ressort (14) s'étendent dans une large mesure sur l'ensemble de la longueur de la zone en direction de l'extrémité libre (18) qui décrit un segment circonférentiel (20) de l'outil en cylindre (10).

4. Dispositif de travail du sol selon l'une quelconque des revendications 1 à 3, dans lequel lesdits éléments formant ressort (14) sont ancrés sur ledit arbre (12) radialement vers l'extérieur ou à angle aigu par rapport à la direction radiale et sont courbés dans la direction tangentielle au niveau de la circonférence circulaire extérieure de l'outil en cylindre (10) et vers le segment circonférentiel (20).

5. Dispositif de travail du sol selon l'une quelconque des revendications 1 à 4, dans lequel les éléments formant ressort (14) présentent chacun une importance de profilage différente suivant leur extension longitudinale en direction de ladite extrémité libre (18).

6. Dispositif de travail du sol selon l'une quelconque des revendications 1 à 5, dans lequel les extrémités libres (18) des éléments formant ressort (14) sont appuyées chacune sur une butée terminale (26) qui sont fixées sur ledit arbre (12).

7. Dispositif de travail du sol selon la revendication 6, dans lequel au moins quelques-unes des butées terminales (26) sont construites, sur leurs faces frontales (32) montrant vers l'extrémité libre (18) respective de l'élément formant ressort (14), de manière correspondante au profilage (24) des éléments formant ressort (14).

8. Dispositif de travail du sol selon la revendication 6 ou 7, dans lequel les distances respectives des faces frontales (32) des butées terminales (26) par rapport à l'extrémité libre (18) relâchée des éléments formant ressort (14) définissent la course élastique disponible (S) de ceux-ci.

9. Dispositif de travail du sol selon l'une quelconque des revendications 1 à 8, dans lequel une pluralité de groupes d'éléments formant ressort (14) sont répartis, à distance identique ou différente les uns des autres, sur la largeur de travail de l'outil en cylindre (10), dans des groupes individuels étant prévus respectivement deux éléments formant ressort (14) avec des segments circonférentiels (20) d'à peu près 180° chacun ou trois éléments formant ressort (14) avec des segments circonférentiels (20) d'à peu près 120° chacun ou quatre éléments formant ressort (14) avec des segments circonférentiels (20) d'à peu près 90° chacun ou cinq éléments formant ressort (14) avec des segments circonférentiels (20) d'à peu près 72 ° chacun etc.

10. Dispositif de travail du sol selon l'une quelconque des revendications 1 à 8, dans lequel au moins quelques-uns des éléments formant ressort (14) sont profilés, ondulés et/ou dentelés également suivant au moins une partie de leur direction d'extension longitudinale.
